# EUROPÄISCHE PATENTSCHRIFT

(11) **EP 0 750 935 B1**
(45) Veröffentlichungstag und Bekanntmachung des Hinweises auf die Patenterteilung: **26.06.2002**
(21) Anmeldenummer: 96103854.4
(22) Anmeldetag: 12.03.1996
(51) Int. Cl.: B01D 53/46, B01D 53/72

(54) **Verfahren zur Reinigung von Prozessabgasen**
Process for cleaning process waste gases
Procédé d'épuration de gaz effluents de procédés chimiques

(30) Priorität: 28.06.1995 DE 19523493
(43) Veröffentlichungstag der Anmeldung: 02.01.1997
(73) Patentinhaber: Aventis CropScience GmbH, 65929 Frankfurt am Main (DE)
(72) Erfinder: Scholz, Guido, Dr., 84508 Burgkirchen (DE); Dörpinghaus, Norbert, Dr., 50321 Brühl (DE); Grosse, Jürgen, Dr., 50374 Erftstadt (DE)

(56) Entgegenhaltungen:
- EP-A- 0 063 829
- WO-A-90/01365
- DE-A- 2 607 587
- DE-A- 2 730 947
- US-A- 2 313 022
- DATABASE WPI Section Ch, Week 7824 Derwent Publications Ltd., London, GB; Class E36, AN 78-43584A XP002014877 & SU 567 477 A (NATURAL GAS TRANSP) , 22.August 1977
- WASSER, LUFT UND BODEN, Bd. 36, Nr. 7 / 08, 1.Juli 1992, Seiten 58-60, XP000297820 REITHER K: "ABLUFTREINIGUNG BEI HALBLEITERPRODUKTIONEN"

## Beschreibung

Die Erfindung betrifft ein Verfahren zur Entfernung von sauerstoffreaktiven Verbindungen aus Prozeßabgasen.

Bei praktisch allen bekannten chemischen Verfahren fallen Prozeßabgase an. Diese Prozeßabgase müssen bereits jetzt oder in naher Zukunft gereinigt werden, bevor sie in die Luft abgelassen werden können. Je nach Art des Prozeßabgases und der darin enthaltenen zu reinigenden Verbindung sind hierfür verschiedene Verfahren geeignet.

So beschreiben Littlejohn und Chang (Ind. Eng. Chem. Res. 1990, 29, 1420), daß wäßrige Lösungen von Perameisensäure, Peressigsäure, Perpropionsäure und Peroximonoschwefelsäure geeignet sind, um Schwefeldioxid und Schwefelmonoxid aus Abgasen zu entfernen.

In den japanischen Offenlegungsschriften JP-63162025 und JP-63162026 wird beschrieben, daß arsan- und phosphanhaltige Abgase, wie sie etwa bei der Herstellung von Halbleitermaterialien entstehen können, durch eine oxidative Wäsche mit Natriumhypochlorit- oder Chlorgaslösung gereinigt werden.

Die JP-A-63049227 beschreibt, daß Abgase, die PH₃, AsH₃ und B₂H₄ enthalten, mit einer wäßrigen Lösung aus Eisenchlorid, Natriumchlorat und Salzsäure, einer wäßrigen Chlorgaslösung, einer Hypochloritlösung, einer Kaliumpermanganatlösung oder mit Jodwasser gereinigt werden können.

Die obengenannten Verfahren haben jedoch den Nachteil, daß sie bei Prozeßabgasen, die neben den obengenannten Verunreinigungen noch organische Bestandteile (Lösemitteldämpfe) oder Produkte mit organischen Substituenten enthalten, durch die halogenierende Wirkung dieser Verbindungen zu einer AOX-Belastung im Abwasser führen können (AOX ist die Abkürzung für adsorbierbare organische Halogenverbindungen, im allgemeinen an Aktivkohle gemessen).

Beim großtechnischen Einsatz von Kaliumpermanganat als Reinigungssubstanz werden erhebliche Mengen an Mangansalzen in Wasser eingetragen, die zu einem Niederschlag verschiedener Manganoxide führen, so daß der dauerhafte Betrieb einer solchen Anlage verhindert sein kann.

Gemäß dem vorliegenden Stand der Technik fehlt es bisher an einem nicht-halogenierenden Verfahren zur Reinigung von sauerstoffreaktiven, d.h. oxidierbaren Verbindungen aus Prozeßabgasen. Es war daher Aufgabe der Erfindung, ein Verfahren zur Verfügung zu stellen, mit dem sauerstoffreaktive Verbindungen aus Prozeßabgasen weitgehend entfernt werden können und keine Halogenierung von Prozeßgasbestandteilen eintritt.

Diese Aufgabe wird gelöst durch ein Verfahren zur Entfernung von sauerstoffreaktiven Verbindungen der III., IV. oder V. Hauptgruppe des Periodensystems aus Prozeßabgasen, wobei die sauerstoffereaktiven Verbindungen die Formel RₙB₂H₄₋ₙ, RₙSiH₄₋ₙ, RₙGeH₄₋ₙ, RₙPH₃₋ₙ, RₙAsH₃₋ₙ, RₙSbH₃₋ₙ aufweisen, worin R Alkyl (geradkettig oder verzweigt) oder Aryl und n gleich 1, 2, oder 3 ist, und wobei das Prozeßabgas mit einer Waschlösung, bestehend aus 7 bis 25 Gew.-% H₂O₂, 3 bis 7 Gew.-% H₂SO₄, 8 bis 30 Gew.-% Carbonsäure und ad 100 Gew.-% Wasser gewaschen wird.

Mit der erfindungsgemäßen Abgaswäsche können typischerweise die folgenden Borverbindungen entfernt werden: Methylboran, Dimethylboran, Ethylboran, Diethylboran, Propylboran, Dipropylboran, Butylboran, Dibutylboran, cyclo-Hexylboran, Phenylboran und/oder Diphenylboran.

Mit der erfindungsgemäßen Abgaswäsche können typischerweise die folgenden Siliciumbzw. Germaniumverbindungen entfernt werden: Methylsilan, Dimethylsilan, Trimethylsilan, Ethylsilan, Diethylsilan, Triethylsilan, Propylsilan, Dipropylsilan, Tripropylsilan, Butylsilan, Dibutylsilan, Tributylsilan, Phenylsilan, Methyldisilan, Methylgerman, Dimethylgerman, Trimethylgerman, Ethylgerman, Diethylgerman, Triethylgerman, Propylgerman, Dipropylgerman, Tripropylgerman, Butylgerman, Dibutylgerman, Tributylgerman und/oder Phenylgerman.

Mit der erfindungsgemäßen Abgaswäsche können typischerweise die folgenden Phosphor-, Arsen- und/oder Antimonverbindungen entfernt werden: Methylphosphan, Dimethylphosphan, Ethylphosphan, Diethylphosphan, Propylphosphan, Dipropylphosphan, Butylphosphan, Dibutylphosphan, Octylphosphan, Dioctylphosphan, Phenylphosphan, Diphenylphosphan, Methylarsan, Dimethylarsan, Ethylarsan, Diethylarsan, Propylarsan, Dipropylarsan, Butylarsan, Dibutylarsan, Phenylarsan, Methylstiban, Dimethylstiban, Ethylstiban, Diethylstiban, Propylstiban, Dipropylstiban, Butylstiban, Dibutylstiban und/oder Phenylstiban.

Bevorzugt ist die Carbonsäure Ameisensäure, Essigsäure oder Propionsäure.

Die bevorzugte Temperatur der Waschlösung beträgt 15 bis 40 °C.

Bevorzugt ist das Redoxpotential der Waschlösung ≥ 550 mV.

Im allgemeinen wird das Verfahren so durchgeführt, daß das Prozeßabgas durch die Waschlösung solange hindurchgeleitet wird, bis der gewünschte Reinigungseffekt erreicht wird.

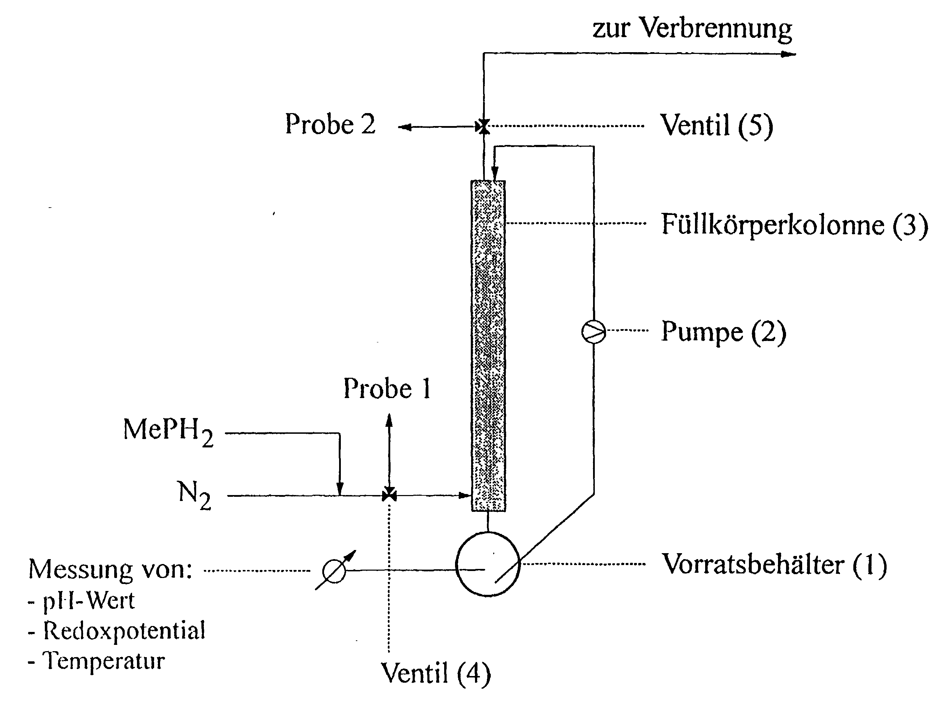

Durchgeführt wurden die Untersuchungen in einer Apparatur gemäß Abbildung 1. Diese bestand aus einem 4 Liter-Vorratsbehälter (1), einer Pumpe (2), einer 2 m langen Füllkörperkolonne (3) mit einem Durchmesser von 50 mm, einer Mischbatterie zur Dosierung der am Fuße der Kolonne eingespeisten Gase, zwei Ventilen (4) und (5) zur Entnahme von Gasproben vor und hinter der Waschkolonne und einer nachgeschalteten Abgasverbrennung. Der Vorratsbehälter war mit Einheiten zur Messung von Temperatur, pH-Wert und Redoxpotential ausgestattet.

Ausdruck findet die Güte der Abgaswäsche in Form des Abreicherungsfaktors, der das Verhältnis des Gehalts der zu entfernenden Verunreinigung vor zu dem nach der Wäsche darstellt.

### Beispiel 1 (Vergleichsbeispiel)

Im Vorratsbehälter der Apparatur gemäß Abbildung 1 wurden 2 kg einer Waschlösung bestehend aus 10 Gew.-% H₂O₂, 10 Gew.-% H₂SO₄ und 80 Gew.-% Wasser vorgelegt und mit einer Fördermenge von 0,060 m³/h über die Füllkörperkolonne umgepumpt. In der Lösung stellte sich eine Temperatur von 28 °C, ein pH-Wert < 0 und ein Redoxpotential von 602 mV ein. Anschließend wurde 0,32 m³/h Stickstoff als Trägergas im Gegenstrom durch die Kolonne geleitet, dem eine kleinere MePH₂-Menge (ca. 0,002 m³/h) als auszuwaschendes Gas zugemischt wurde, so daß für das in die Kolonne eingespeiste Gasgemisch ein Phosphorgehalt von 9,0 g/m³ resultierte (gemessen durch eine Probennahme am Ventil (4)). Nach 30 Minuten Betrieb wurde hinter der Waschkolonne (3) am Ventil (5) eine Gasprobe genommen. Die Analyse der Probe ergab einen Phosphorgehalt von 6,1 g/m³. Die Wäsche erbrachte somit einen Abreicherungsfaktor von 1,48.

### Beispiel 2 (Vergleichsbeispiel)

Es wurde analog Beispiel 1 verfahren, jedoch kam eine Waschlösung mit 10 Gew.-% H₂O₂, 10 Gew.-% CH₃COOH und 80 Gew.-% Wasser zum Einsatz. In der Lösung stellte sich.eine Temperatur von 27 °C, ein pH-Wert von 0,9 und ein Redoxpotential von 575 mV ein. Die Analyse der am Ventil (5) entnommenen Gasprobe ergab einen Phosphorgehalt von 4,9 g/m³, entsprechend einem Abreicherungsfaktor von 1,84.

### Beispiel 3 (Vergleichsbeispiel)

Es wurde analog Beispiel 1 verfahren, jedoch kam eine Waschlösung mit 10 Gew.-% H₂O₂, 20 Gew.-% CH₃COOH und 70 Gew.-% Wasser zum Einsatz. In der Lösung stellte sich eine Temperatur von 27 °C, ein pH-Wert von 1,3 und ein Redoxpotential von 544 mV ein.

Eingespeist wurde ein Gasgemisch mit einem Phosphorgehalt von 7,9 g/m³. Die Analyse der am Ventil (5) entnommenen Gasprobe ergab einen Phosphorgehalt von 3,9 g/m³, entsprechend einem Abreicherungsfaktor von 2,03.

### Beispiel 4 (Vergleichsbeispiel)

Es wurde analog Beispiel 1 verfahren, jedoch kam eine Waschlösung mit der Zusammensetzung 10 Gew.-% H₂O₂, 20 Gew.-% CH₃COOH, 1 Gew.-% H₂SO₄ und 69 Gew.-% Wasser zum Einsatz. In der Lösung stellte sich eine Temperatur von 25 °C, ein pH-Wert von 0,6 und ein Redoxpotential von 549 mV ein. Eingespeist wurde ein Gasgemisch mit einem Phosphorgehalt von 9,7 g/m³. Die Analyse der am Ventil (5) entnommenen Gasprobe ergab einen Phosphorgehalt von 1,7 g/m³, entsprechend einem Abreicherungsfaktor von 5,71.

### Beispiel 5 (Vergleichsbeispiel)

Es wurde analog Beispiel 1 verfahren, jedoch kam eine Waschlösung mit der Zusammensetzung 1,6 Gew.-% H₂O₂, 5,4 Gew.-% HCl und 93 Gew.-% Wasser zum Einsatz. In der Lösung stellte sich eine Temperatur von 24 °C, ein pH-Wert von 0,1 und ein Redoxpotential von 627 mV ein. Eingespeist wurde ein Gasgemisch mit einem Phosphorgehalt von 10,8 g/m³. Die Analyse der am Ventil (5) entnommenen Gasprobe ergab einen Phosphorgehalt von 7,3 g/m³, entsprechend einem Abreicherungsfaktor von 1,48.

### Beispiel 6 (Vergleichsbeispiel)

Es wurde analog Beispiel 1 verfahren, jedoch kam eine Waschlösung mit der Zusammensetzung 10 Gew.-% H₂O₂, 20 Gew.-% CH₃COOH, 5 Gew.-% H₂SO₄ und 65 Gew.-% Wasser zum Einsatz. Weiterhin wurde das auszuwaschende Gas MePH₂ durch PH₃ ersetzt. In der Lösung stellte sich eine Temperatur von 25 °C, ein pH-Wert von < 0 und ein Redoxpotential von 616 mV ein. Eingespeist wurde ein Gasgemisch mit einem Phosphorgehalt von 27,7 g/m³. Die Analyse der am Ventil (5) entnommenen Gasprobe ergab einen Phosphorgehalt von 21,9 g/m³, entsprechend einem Abreicherungsfaktor von 1,26.

### Beispiel 7

Es wurde analog Beispiel 1 verfahren, jedoch kam eine Waschlösung mit der Zusammensetzung 10 Gew.-% H₂O₂, 20 Gew.-% CH₃COOH, 5 Gew.-% H₂SO₄ und 65 Gew.-% Wasser zum Einsatz. In der Lösung stellte sich eine Temperatur von 25°C, ein pH-Wert von < 0 und ein Redoxpotential von 616 mV ein. Eingespeist wurde ein Gasgemisch mit einem Phosphorgehalt von 136 g/m³. Die Analyse der am Ventil (5) entnommenen Gasprobe ergab einen Phosphorgehalt von 0,08 g/m³, entsprechend einem Abreicherungsfaktor von 1700.

### Beispiel 8 (Vergleichsbeispiel)

Es wurde analog Beispiel 1 verfahren, jedoch kam eine Waschlösung mit der Zusammensetzung 20 Gew.-% H₂O₂, 20 Gew.-% CH₃COOH, 1 Gew.-% H₂SO₄ und 59 Gew.-% Wasser zum Einsatz. In der Lösung stellte sich eine Temperatur von 25 °C, ein pH-Wert von < 0 und ein Redoxpotential von 602 mV ein. Eingespeist wurde ein Gasgemisch mit einem Phosphorgehalt von 117 g/m³. Die Analyse der am Ventil (5) entnommenen Gasprobe ergab einen Phosphorgehalt von 0,79 g/m³, entsprechend einem Abreicherungsfaktor von 1481.

### Beispiel 9

Es wurde analog Beispiel 1 verfahren, jedoch kam eine Waschlösung mit der Zusammensetzung 20 Gew.-% H₂O₂, 20 Gew.-% CH₃COOH, 5 Gew.-% H₂SO₄ und 55 Gew.-% Wasser zum Einsatz. In der Lösung stellte sich eine Temperatur von 25 °C, ein pH-Wert von < 0 und ein Redoxpotential von 653 mV ein. Eingespeist wurde ein Gasgemisch mit einem Phosphorgehalt von 143 g/m³. Die Analyse der am Ventil (5) entnommenen Gasprobe ergab einen Phosphorgehalt von < 0,05 g/m³ (Nachweisgrenze), entsprechend einem Abreicherungsfaktor von mehr als 2860.

### Beispiel 10

Es wurde analog Beispiel 1 verfahren, jedoch kam eine Waschlösung mit der Zusammensetzung 10 Gew.-% H₂O₂, 20 Gew.-% HCOOH, 5 Gew.-% H₂SO₄ und 65 Gew.-% Wasser zum Einsatz. In der Lösung stellte sich eine Temperatur von 26 °C, ein pH-Wert von < 0 und ein Redoxpotential von 641 mV ein. Eingespeist wurde ein Gasgemisch mit einem Phosphorgehalt von 29,2 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 556.

### Beispiel 11

Es wurde analog Beispiel 1 verfahren, jedoch kam eine Waschlösung mit der Zusammensetzung 10 Gew.-% H₂O₂, 25 Gew.-% CH₃CH₂COOH, 5 Gew.-% H₂SO₄ und 60 Gew.-% Wasser zum Einsatz. In der Lösung stellte sich eine Temperatur von 26 °C, ein pH-Wert von < 0 und ein Redoxpotential von 612 mV ein. Eingespeist wurde ein Gasgemisch mit einem Phosphorgehalt von 29,4 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 588.

### Beispiel 12

Es wurde analog Beispiel 7 verfahren, jedoch wurde dem als Trägergas fungierenden Stickstoffstrom statt MePH₂ ein Me₂PH-Strom (ca. 0,003 m³/h) zugemischt. Für das in die Waschkolonne eingespeiste Gasgemisch (Probenahme am Ventil (4)) resultierte ein Phosphorgehalt von 32,4 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 648.

### Beispiel 13

Es wurde analog Beispiel 7 verfahren, jedoch wurde dem als Trägergas fungierenden Stickstoffstrom statt MePH₂ ein EtPH₂-Strom (ca. 0,003 m³/h) zugemischt. Für das in die Waschkolonne eingespeiste Gasgemisch (Probenahme am Ventil (4)) resultierte ein Phosphorgehalt von 31,6 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 632.

### Beispiel 14

Es wurde analog Beispiel 7 verfahren, jedoch wurde dem als Trägergas fungierenden Stickstoffstrom statt MePH₂ ein Phenylphosphan-Strom (ca. 0,005 m³/h) zugemischt. Für das in die Waschkolonne eingespeiste Gasgemisch (Probenahme am Ventil (4)) resultierte ein Phosphorgehalt von 29,8 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 596.

### Beispiel 15

Es wurde analog Beispiel 7 verfahren, jedoch wurde dem als Trägergas fungierenden Stickstoffstrom statt MePH₂ ein EtAsH₂-Strom (ca. 0,002 m³/h) zugemischt. Für das in die Waschkolonne eingespeiste Gasgemisch (Probenahme am Ventil (4)) resultierte ein Arsengehalt von 45,3 g/m³. Die Analyse der am Ventil (5) entnommenen Gasprobe ergab einen Arsengehalt von < 0,07 g/m³ (Nachweisgrenze), entsprechend einem Abreicherungsfaktor von > 647.

### Beispiel 16

Es wurde analog Beispiel 7 verfahren, jedoch wurde dem als Trägergas fungierenden Stickstoffstrom statt MePH₂ ein MeSiH₃-Strom (ca. 0,003 m₃/h) zugemischt. Für das in die Waschkolonne eingespeiste Gasgemisch (Probenahme am Ventil (4)) resultierte ein Siliciumgehalt von 32,4 g/m³. Die Analyse der am Ventil (5) entnommenen Gasprobe ergab einen Siliciumgehalt von < 0,08 g/m³ (Nachweisgrenze), entsprechend einem Abreicherungsfaktor von > 405.

### Beispiel 17 (Vergleichsbeispiel)

Es wurde analog Beispiel 1 verfahren, jedoch kam eine Waschlösung mit der Zusammensetzung 15 Gew.-% H₂O₂, 30 Gew.-% CH₃CH₂COOH, 10 Gew.-% H₂SO₄ und 45 Gew.-% Wasser zum Einsatz. In der Lösung stellte sich eine Temperatur von 25 °C, ein pH-Wert von < 0 und ein Redoxpotential von 647 mV ein. Eingespeist wurde ein Gasgemisch mit einem Phosphorgehalt von 137 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 2740.

### Beispiel 18 (Vergleichsbeispiel)

Es wurde analog Beispiel 1 verfahren, jedoch kam eine Waschlösung mit der Zusammensetzung 45 Gew.-% H₂O₂, 15 Gew.-% CH₃CH₂COOH, 3 Gew.-% H₂SO₄ und 37 Gew.-% Wasser zum Einsatz. In der Lösung stellte sich eine Temperatur von 25 °C, ein pH-Wert von < 0 und ein Redoxpotential von 633 mV ein. Eingespeist wurde ein Gasgemisch mit einem Phosphorgehalt von 127 g/m³. Die Analyse der am Ventil (5) entnommenen Gasprobe ergab einen Phosphorgehalt von < 0,05 g/m³ (Nachweisgrenze), entsprechend einem Abreicherungsfaktor von > 2540.

### Beispiel 19 (mit Betriebsabgas)

Der Versuch mit phosphorhaltigem Betriebsabgas wurde in der gleichen Versuchsapparatur wie in Beispiel 1 durchgeführt. Anstelle des Stickstoff-Trägergases, dem die zu oxidierende Verbindung beigemischt wurde, wurde ein MePH₂-haltiges Prozeßgas, das noch n-Buten, Di-n-Butylether und n-Butylchlorid enthielt, eingesetzt.

Im Vorratsbehälter der Apparatur wurden 5 kg einer Waschlösung bestehend aus 20 Gew.-% H₂O₂, 10 Gew.-% CH₃COOH, 5 Gew.-% H₂SO₄ und 65 Gew.-% Wasser vorgelegt und mit einem Förderstrom von 0,06 m³/h über die Waschkolonne umgepumpt. Zu Beginn des Versuches stellte sich eine Temperatur von 33 °C, ein pH-Wert < 0 und ein Redoxpotential von 700 mV ein. Das Prozeßabgas besaß einen Phosphorgehalt von 1,1 g/m³ und wurde mit 0,6 m³/h am Fuß der Kolonne eingespeist. Nach Waschkolonne (Ventil 5) ergab die Analyse einen Phosphorgehalt < 0,05 g/m³ (Nachweisgrenze), entsprechend einem Abreicherungsfaktor von > 22.

Die Temperatur der Waschlösung schwankte abhängig von der Tagestemperatur zwischen 30 und 36 °C. Der Phosphorgehalt des Prozeßabgases bewegte sich zwischen 1,1 und 0,5 g/m³.

Die Apparatur wurde in kontinuierlicher Fahrweise solange betrieben, bis die Oxidationswirkung der Waschlösung nicht mehr ausreichte und das Methylphosphan durch den Wäscher durchschlug.

Nach 7 Tagen hatte sich der Redoxwert auf 610 mV abgebaut und es konnte zum ersten Mal Methylphosphan, entsprechend einem Phosphorgehalt von 0,3 g/m³, im Abgas nach Wäscher (Ventil 5) nachgewiesen werden. Die zugehörige Phosphorkonzentration vor Wäscher betrug zu diesem Zeitpunkt 0,5 g/m³.

### Beispiel 20 (mit Betriebsabgas)

Es wurde analog Beispiel 19 verfahren. Zu Beginn des Versuches stellte sich eine Temperatur von 31 °C, ein pH-Wert < 0 und ein Redoxpotential von 630 mV ein. Das Prozeßabgas, bestehend aus n-Buten, Di-n-Butylether, n-Butylchlorid und Methylphosphan besaß einen Phosphorgehalt von 2,1 g/m³ und wurde mit 0,6 m³/h am Fuß der Kolonne eingespeist. Nach Waschkolonne (Ventil 5) ergab die Analyse einen Phosphorgehalt < 0,05 g/m³, entsprechend einem Abreicherungsfaktor von > 42.

Die Temperatur der Waschlösung schwankte abhängig von der Tagestemperatur zwischen 27 und 33 °C. Der Phosphorgehalt bewegte sich zwischen 2,1 und 1,1 g/m³.

Nach 8 Tagen hatte sich der Redoxwert auf 610 mV abgebaut und es konnte zum ersten Mal Methylphosphan, entsprechend einem Phosphorgehalt von 0,16 g/m³ im Abgas nach Wäscher (Ventil 5) nachgewiesen werden. Die zugehörige Phosphorkonzentration vor Wäscher betrugt zu diesem Zeitpunkt 1,1 g/m³.

Eine Analyse der Waschlösung ergab, daß sich der Gehalt an H₂O₂ auf 1,5 Gew.-% reduziert hatte. Der Gehalt an Phosphor betrug 4,6 Gew.-% und setzte sich nach P-NMR zu 37 % aus Methanphosphonigsäure, 50 % Methanphosphonsäure und 13 % Dimethylphosphinsäure zusammen.

## Patentansprüche

1. Verfahren zur Entfernung von sauerstoffreaktiven Verbindungen der III., IV. oder V. Hauptgruppe des Periodensystems aus Prozeßabgasen, wobei die sauerstoffreaktiven Verbindungen die Formel RₙB₂H₄₋ₙ, RₙSiH₄₋ₙ, RₙGeH₄₋ₙ, RₙPH₃₋ₙ, RₙAsH₃₋ₙ oder RₙSbH₃₋ₙ aufweisen, worin
R Alkyl (geradkettig oder verzweigt) oder Aryl und
n gleich 1, 2 oder 3 ist, und wobei
das Prozeßabgas mit einer Waschlösung, bestehend aus
7 bis 25 Gew.-% H₂O₂
3 bis 7 Gew.-% H₂SO₄
8 bis 30 Gew.-% Carbonsäure und
ad 100 Gew.-% Wasser
gewaschen wird.

2. Verfahren nach Anspruch 1, worin die Carbonsäure Ameisensäure, Essigsäure oder Propionsäure ist.

3. Verfahren nach mindestens einem der Ansprüche 1 oder 2, worin die Temperatur der Waschlösung 15 bis 40°C beträgt.

4. Verfahren nach mindestens einem der Ansprüche 1 bis 3, worin das Redoxpotential der Waschlösung ≥ 550 mV ist.

5. Verfahren nach mindestens einem der Ansprüche 1 bis 4, worin das Prozeßgas durch die Waschlösung hindurchgeleitet wird.

## Claims

1. A process for removing oxygen-reactive compounds of main group III, IV or V of the Periodic Table of the Elements from process off-gases, with the oxygen-reactive compounds having the formula RₙB₂H₄₋ₙ, RₙSiH₄₋ₙ, RₙGeH₄₋ₙ, RₙPH₃₋ₙ, RₙAsH₃₋ₙ Or RₙSbH₃₋ₙ, where
R is alkyl (straight-chain or branched) or aryl and
n is 1, 2 or 3, and in which
the process off-gas is scrubbed with a scrubbing solution consisting of
7 to 25% by weight of H₂O₂
3 to 7% by weight of H₂SO₄
8 to 30% by weight of carboxylic acid and
water to 100% by weight.

2. The process as claimed in claim 1, wherein the carboxylic acid is formic acid, acetic acid or propionic acid.

3. The process as claimed in at least one of claims 1 or 2, wherein the temperature of the scrubbing solution is 15 to 40°C.

4. The process as claimed in at least one of claims 1 to 3, wherein the redox potential of the scrubbing solution is ≥ 550 mV.

5. The process as claimed in at least one of claims 1 to 4, wherein the process off-gas is passed through the scrubbing solution.

## Revendications

1. Procédé pour l'élimination de composés réactifs à l'oxygène du groupe principal III, IV ou V de la Classification périodique des éléments à partir des gaz résiduels, les composés réactifs à l'oxygène répondent aux formules RₙB₂H₄₋ₙ, RₙSiH₄₋ₙ, RₙGeH₄₋ₙ, RₙPH₃₋ₙ, RₙAsH₃₋ₙ, RₙSbH₃₋ₙ, où
R représente des groupes alkyle (linéaire ou ramifié) ou aryle et
n vaut 1, 2 ou 3,
les gaz résiduels étant lavés par une solution de lavage contenant
de 7 à 25 % en masse de H₂O₂,
de 3 à 7 % en masse de H₂SO₄,
de 8 à 30 % en masse d'acide carboxylique et
q.s.p. 100 % en masse d'eau.

2. Procédé selon la revendication 1, où l'acide carboxylique est l'acide formique, l'acide acétique ou l'acide propionique.

3. Procédé selon au moins l'une des revendications 1 ou 2, où la température de la solution de lavage est de 15 à 40°C.

4. Procédé selon au moins l'une des revendications 1 à 3, où le potentiel redox de la solution de lavage est ≥ 550 mV.

5. Procédé selon au moins l'une des revendications 1 à 4, où les gaz de procédé résiduels sont conduits à travers la solution de lavage.
